(19) Europäisches Patentamt
European Patent Office
Office européen des brevets

(11) **EP 3 287 978 A1**

(12) # EUROPEAN PATENT APPLICATION

(43) Date of publication:
**28.02.2018 Bulletin 2018/09**

(51) Int Cl.:
***G06Q 30/06*** (2012.01)

(21) Application number: **16200854.4**

(22) Date of filing: **28.11.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **24.08.2016 CN 201610720318**

(71) Applicant: **SHANG HAI PAN SHI TOU ZI GUAN LI
YOU XIAN GONG SI
Shanghai (CN)**

(72) Inventors:
• **PAN, ZhongGuang**
  **Shanghai (CN)**
• **TENG, YanMei**
  **Beijing (CN)**

(74) Representative: **Viering, Jentschura & Partner
mbB
Patent- und Rechtsanwälte
Am Brauhaus 8
01099 Dresden (DE)**

(54) **METHOD AND APPARATUS FOR PROCESSING TRANSACTION DATA**

(57)    The present application discloses a method and an apparatus for processing transaction data, wherein the method includes: acquiring, by a user device, commodity information of any commodity in a shopping place from a server and outputting the commodity information; taking the commodity corresponding to the commodity information as a first pre-purchasing commodity when receiving a first purchasing request and determining purchasing information of the first pre-purchasing commodity, the purchasing information at least including a commodity name and a purchasing quantity; the purchasing information at least including a commodity name and a purchasing quantity; and sending the purchasing information of the first pre-purchasing commodity to the server to facilitate the server to generate a first purchasing notification, the first purchasing notification being used for promoting a distribution personnel to distribute commodity according to the purchasing information of the first pre-purchasing commodity. The embodiments of the present application improve the shopping convenience and efficiency.

```
┌──────────────────────────────────────────────────┐
│ A server provides commodity information of any     │─ 101
│ commodity in a shopping place to a user device     │
└──────────────────────────────────────────────────┘
                        │
                        ▼
┌──────────────────────────────────────────────────┐
│ The user device outputs the commodity information  │─ 102
└──────────────────────────────────────────────────┘
                        │
                        ▼
┌──────────────────────────────────────────────────┐
│ The user device takes the commodity corresponding  │─ 103
│ to the commodity information as a first             │
│ pre-purchasing commodity when receiving a first     │
│ purchasing request and determines purchasing        │
│ information of the first pre-purchasing commodity   │
└──────────────────────────────────────────────────┘
                        │
                        ▼
┌──────────────────────────────────────────────────┐
│ The user device sends the purchasing information    │─ 104
│ of the first pre-purchasing commodity to the server │
└──────────────────────────────────────────────────┘
                        │
                        ▼
┌──────────────────────────────────────────────────┐
│ The server generates a first Purchasing             │─ 105
│ notification according to the purchasing            │
│ information of the first pre-purchasing commodity   │
└──────────────────────────────────────────────────┘
```

**Fig. 1**

EP 3 287 978 A1

## Description

## TECHNICAL FIELD

The present application relates to the field of electronic technologies, and more particularly, to a method and an apparatus for processing transaction data.

## BACKGROUND

With the economic development and improvement of living standards, there are increasing demands on shopping, shopping malls, so that supermarkets and other large shopping places are gradually rising.

In the shopping places, a traditional shopping method is usually that a user selects commodities needed into a shopping cart, pays the commodities at a cashier, and then acquires the commodities after payment.

However, in this traditional shopping manner, when more commodities are purchased, the user needs to carry a number of commodities to move in the shopping place, which results in great inconvenience to the user while shopping.

## SUMMARY

In light of this, a technical problem to be solved by the present application is to provide a method and an apparatus for processing transaction data, which improve the shopping convenience.

In order to solve the foregoing technical problem, a first aspect of the present application provides a method for processing transaction data, including:

acquiring, by a user device, commodity information of any commodity in a shopping place from a server and outputting the commodity information;

taking the commodity corresponding to the commodity information as a first pre-purchasing commodity when receiving a first purchasing request and determining purchasing information of the first pre-purchasing commodity; wherein the purchasing information at least includes a commodity name and a purchasing quantity; and

sending the purchasing information of the first pre-purchasing commodity to the server to facilitate the server to generate a first purchasing notification, the first purchasing notification being used for promoting a distribution personnel to distribute commodity according to the purchasing information of the first pre-purchasing commodity.

A second aspect of the present application provides a method for processing transaction data, including:

providing, by a server, commodity information of any commodity in a shopping place to a user device, which is outputted by the user device; and

generating a first purchasing notification according to purchasing information of a first pre-purchasing commodity when receiving the purchasing information of the first pre-purchasing commodity sent by the user device, the purchasing information of the first pre-purchasing commodity being sent by the user device after taking the commodity corresponding to the commodity information as the first pre-purchasing commodity and determining the purchasing information of the first pre-purchasing commodity when receiving a first purchasing request, and the first purchasing notification being used for prompting a distribution personnel to distribute commodity according to the purchasing information of the first pre-purchasing commodity.

A third aspect of the present application provides an apparatus for processing transaction data, including:

a commodity acquisition module configured to acquire commodity information of any commodity in a shopping place from a server and output the commodity information;

a first purchasing module configured to take the commodity corresponding to the commodity information as a first pre-purchasing commodity when receiving a first purchasing request and determine purchasing information of the first pre-purchasing commodity, the purchasing information at least including a commodity name and a purchasing quantity; and

a first transaction triggering module configured to send the purchasing information of the first pre-purchasing commodity to the server to facilitate the server to generate a first purchasing notification, the first purchasing notification being used for promoting a distribution personnel to distribute commodity according to the purchasing information of the first pre-purchasing commodity.

A fourth aspect of the present application provides an apparatus for processing transaction data, including:

a commodity providing module configured to provide commodity information of any commodity in a shopping place to a user device, which is outputted by the user device; and

a first transaction generating module configured to generate a first purchasing notification according to purchasing information of a first pre-purchasing commodity when receiving the purchasing information of the first pre-purchasing commodity sent by the user device, the purchasing information of the first pre-purchasing commodity being sent by the user device after taking the commodity corresponding to the commodity information as the first pre-purchasing commodity and determining the purchasing information of the first pre-purchasing commodity when receiving a first purchasing request, and the first purchasing notification being used for prompting a distribution personnel to distribute commodity according to the purchasing information of the first pre-purchasing commodity.

Compared with the prior art, the technical effects that may be obtained by the present application include:

the commodity information of each commodity in the shopping place is saved in the server, and the user device may acquire the commodity information of any commodity from the server, and outputs the commodity information to a user to view; the user device takes the commodity information as the first pre-purchasing commodity when receiving the first purchasing request triggered by the user and determines the purchasing information of the first pre-purchasing commodity, the purchasing information at least including a commodity name and a purchasing quantity; and the purchasing information of the first pre-purchasing commodity is sent to the server to facilitate the server to generate the first purchasing notification, the first purchasing notification being used for promoting the distribution personnel to distribute commodity according to the purchasing information of the first pre-purchasing commodity. According to the embodiments of the present application, the user does not need to carry a number of commodities in the shopping place, and only needs to tell the purchasing information of the pre-purchasing commodity to a background server by using the user device, then the server may notify the distribution personnel to distribute commodity, so that the shopping convenience is improved, and the shopping efficiency is increased at the same time.

Of course, implementing any product of the present application does not necessarily need to achieve all of the technical effects described above at the same time.

BRIEF DESCRIPTION OF THE DRAWINGS

The drawings illustrated herein are intended to provide further understanding of the present application, constituting a part of the present application. Exemplary embodiments and explanations of the present application here are only for explanation of the present invention, but are not intended to limit the present application. In the drawings:

Fig. 1 is a flow chart of one embodiment of a method for processing transaction data of the embodiments of the present application;

Figs. 2a to 2c are schematic diagrams for displaying a user device in the embodiments of the present application respectively;

Fig. 3 is a flow chart of another embodiment of a method for processing transaction data of the embodiments of the present application;

Fig. 4 is a schematic diagram for displaying a user device in the embodiments of the present application;

Fig. 5 is a structural schematic diagram of one embodiment of an apparatus for processing transaction data of the embodiments of the present application;

Fig. 6 is a structural schematic diagram of another embodiment of an apparatus for processing transaction data of the embodiments of the present application;

Fig. 7 is a structural schematic diagram of another embodiment of an apparatus for processing transaction data of the embodiments of the present application; and

Fig. 8 is a structural schematic diagram of another embodiment of an apparatus for processing transaction data of the embodiments of the present application.

DETAILED DESCRIPTION

The implementation manners of the present application will be explained in details with reference to the drawings and embodiments hereinafter, so that the realization process of how to solve the technical problems by using a technical means and achieve the technical efficacy can be sufficiently understood and implemented accordingly.

The technical solutions of the present application are mainly applied to supermarkets, emporiums and other shopping places, and particularly applied in supermarkets because a user will usually purchase a large number of commodities since the supermarkets have wide range and huge amount of commodities. While in a traditional way of shopping, the user needs to select commodities from commodity shelves, put the commodities into a shopping cart or shopping bag, and pays at a casher. However, the user usually needs to wait for a very long time to pay the commodities due to the lacking of cashers. Therefore, the shopping is very inconvenient, and the shopping efficiency is affected.

In order to solve the technical problem of inconvenient shopping in the prior art, the inventor has made a series of studies on the technical solution of the present application. In the embodiments of the present application, a user may acquire commodity information of any commodity in a shopping place from a server through a user device, and output the commodity information; the server is saved with commodity information of different commodities in the shopping place; the user device takes the commodity corresponding to the commodity information as a first pre-purchasing commodity when receiving a first purchasing request and determines purchasing information of the first pre-purchasing commodity, the purchasing information at least including a commodity name and a purchasing quantity; and the purchasing information of the first pre-purchasing commodity is sent to the server to facilitate the server to generate the first purchasing notification, the first purchasing notification being used for promoting the distribution personnel to distribute commodity according to the purchasing information of the first pre-purchasing commodity. According to the embodiments of the present application, the user does not need to carry a number of commodities in the shopping place, and only needs to tell the purchasing information of the pre-purchasing commodity to a background server by using the user device, then the server may notify the distribution personnel to distribute commodity; the user may get the commodities at a commodity distribution place, and the distribution personnel may also send the commodities to a place designated by the user, so that the shopping convenience is improved, and the shopping efficiency is increased at the same time.

The technical solutions of the present application will be described in details hereinafter with reference to the drawings.

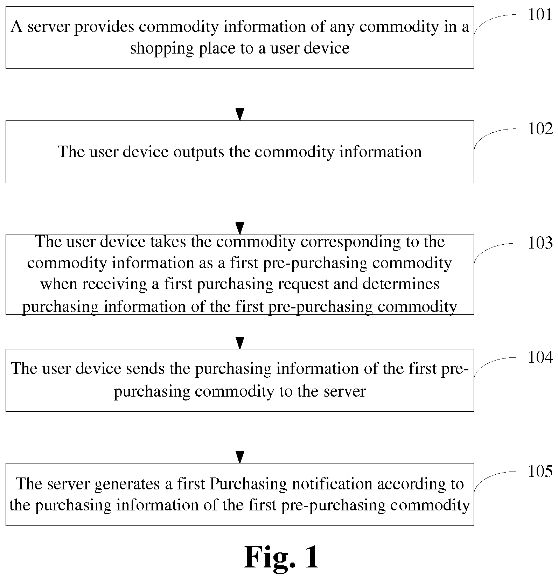

Fig. 1 is a flow chart of one embodiment of a method for processing transaction data provided by the embodiments of the present application. The method may include the several steps as follows.

In step 101: a server provides commodity information of any commodity in a shopping place to a user device.

In step 102: the user device outputs the commodity information.

In the shopping place, the commodity is usually disposed in a commodity shelf.

Commodity information of different commodities in the shopping place is pre-saved in the server.

The server may be a server in an ERP (Enterprise Resource Planning, Enterprise Resource Planning) system in the shopping place.

Wherein, the commodity information may at least include a commodity name, and certainly, may also include a commodity price, a commodity introduction content, etc.

Moreover, the commodity information may also include a prompt message for purchasing, a prompt message for adding the commodity into a shopping list, or the like.

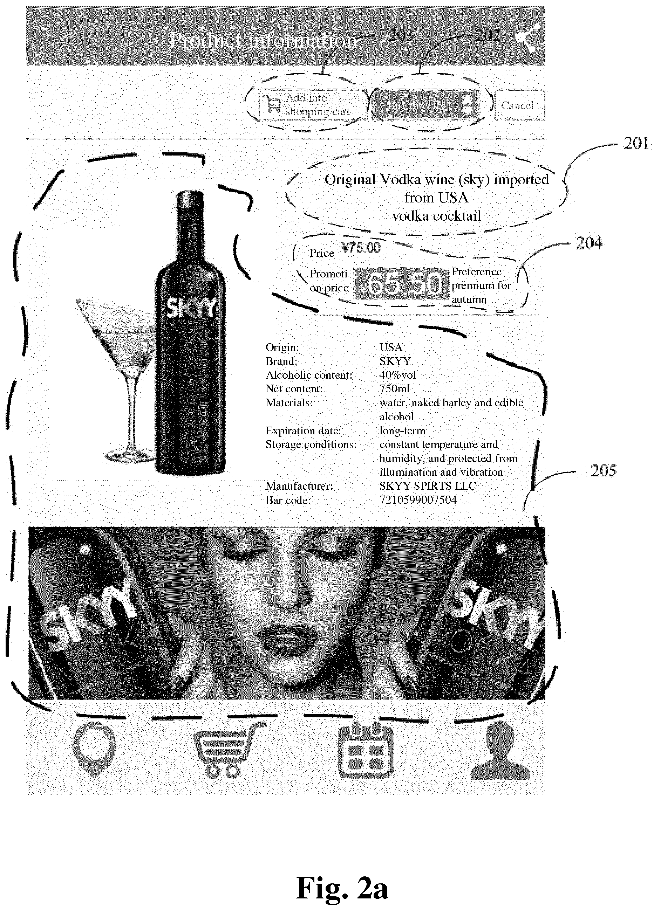

Fig. 2a is a schematic diagram for displaying commodity information outputted by the user device in one practical application. The commodity information may include a commodity name 201, a prompt message for purchasing 202, a prompt message for adding the commodity into a shopping list 203, a commodity price 204, a commodity introduction content 205, etc. The commodity introduction content includes word explanation and picture explanation, or the like.

When all the contents of the commodity information cannot be displayed in a screen of the user device completely, a page turning operation may also be conducted to view contents that are not displayed.

It should be noted that Fig. 2a is merely a block diagram that is exemplary and explanatory to the displaying of the commodity information in the user device, and should not be deemed as a specific limitation to the specific contents and display configuration of the commodity information of the present invention. The specific contents of the commodity information may be changed according to different practical application situations, and the display configuration of the commodity information in the page may also be adjusted according to the actual situations.

Moreover, the user device may acquire commodity information of more commodities from the server. At this moment, the commodity information of each commodity may be outputted in a form of list.

In step 103: the user device takes the commodity corresponding to the commodity information as a first pre-purchasing commodity when receiving a first purchasing request and determines purchasing information of the first pre-purchasing commodity.

Wherein, the purchasing information may include a commodity name and a purchasing quantity, and may also include a commodity price and other information.

The first purchasing request may be triggered by the user, and may be specifically generated by triggering the prompt message for purchasing.

Wherein, the purchasing quantity of the purchasing information may be inputted by the user and carried in the first purchasing request.

In step 104: the user device sends the purchasing information of the first pre-purchasing commodity to the server.

In step 105: the server generates a first purchasing notification according to the purchasing information of the first pre-purchasing commodity, the first purchasing notification being used for prompting a distribution personnel to distribute commodity according to the purchasing information of the first pre-purchasing commodity.

The server generates the first purchasing notification namely after acquiring the purchasing information of the first pre-purchasing commodity. The first purchasing notification may be sent to a user device of the distribution personnel and outputted, to facilitate prompting the distribution personnel to distribute commodity.

According to the embodiment of the present application, the commodities may be uniformly distributed by a special distribution personnel, and the user does not need to carry a large number of commodities to move, so that the shopping convenience and the shopping efficiency are improved.

As another embodiment, the server, after generating the first purchasing notification according to the purchasing information of the first pre-purchasing commodity, may also send commodity pick-up address information to the user device, then the user device outputs the address information, so that the user may uniformly pick up the first pre-purchasing commodity at a commodity pick-up place corresponding to the commodity pick-up address. Wherein, the commodity pick-up address may be a cashier desk of the shopping place, so that the user may directly acquire the first pre-purchasing commodity after paying at the cashier desk.

Certainly, the user device may send receiving address information to the server according to a user address request, wherein the receiving address information may be carried in the purchasing information, so that the first purchasing notification is specifically used for notifying the distribution personnel to distribute commodities according to the purchasing information of the first pre-purchasing commodity and deliver the commodities according to the receiving address.

The user device may also send a commodity pick-up time or a commodity receiving time to the server according to a user time request, thus picking up or receiving commodity by appointments.

The first pre-purchasing commodity may be paid after the user acquires the first pre-purchasing commodity. Of course, other payment methods may also be used.

As another embodiment, after the user sends the purchasing information of the first pre-purchasing commodity to the server, the method may also include the following steps.

The server generates first transaction order information according to the purchasing information of the first pre-purchasing commodity, wherein the first transaction order information at least includes a commodity name and a total commodity price of the first pre-purchasing commodity; of course, the transaction order information may also include the commodity pick-up address information or the receiving address information, etc.

The user device receives the first transaction order information sent by the server and outputs the first transaction order information.

The user device sends transaction confirmation information to the server when receiving a user confirmation request.

Then the server generates the first purchasing notification after receiving the transaction confirmation information.

By outputting the first transaction order information, the user is facilitate to confirm a pre-purchasing commodity and a commodity price, so as to decide whether to purchase; therefore, the user device sends the transaction confirmation information to the server when receiving the user confirmation request, and then the server generates the first purchasing notification.

Certainly, the user device sends transaction cancellation information to the server when receiving a user cancellation request, so that the server may cancel the transaction after receiving the transaction cancellation information and delete the first transaction order information.

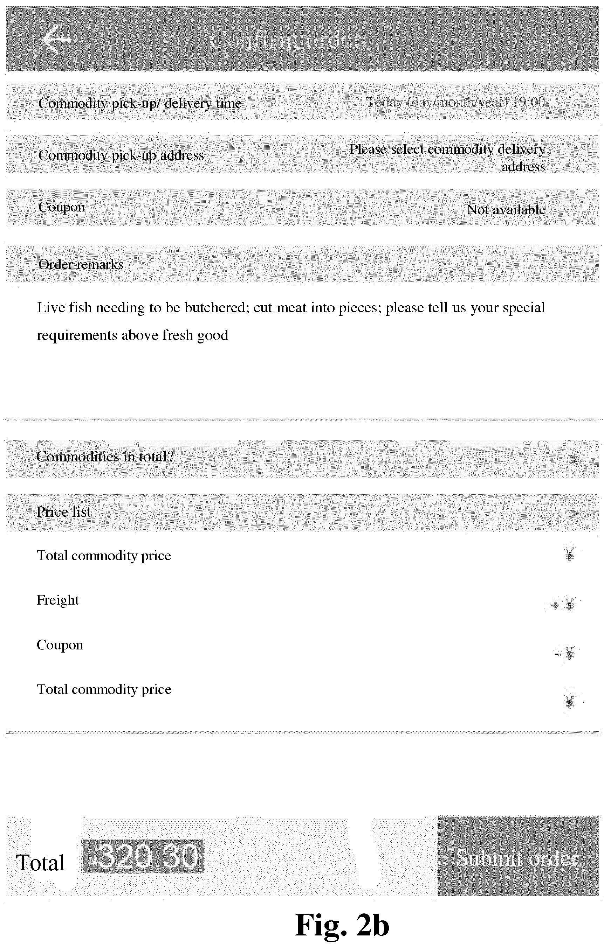

Fig. 2b is a schematic diagram for displaying the first transaction order information outputted by the user device in one practical application. The first transaction order information at least includes a total commodity price of the first pre-purchasing commodity, and may also include information like a commodity pick-up address, commodity pick-up or delivery time, etc.

The first transaction order information may also be modified, for example, the commodity pick-up address and the commodity pick-up or delivery time may be modified.

The user may perform an order submission operation after confirming the transaction order information, and the user device may send the transaction confirmation information to the server after receiving an order submission request.

Wherein, as another embodiment, in order to improve the shopping convenience and shopping efficiency to facilitate the payment of the user, the sending the transaction confirmation information to the server when receiving the user confirmation request may include:

invoking a third party system to perform online payment according to the total commodity price of the first pre-purchasing commodity when receiving the user confirmation request; and

sending the transaction confirmation information to the server after the online payment is successful.

That is, the user may perform online payment through the user device, thus not needing to wait at a cashier desk for payment, so that the shopping convenience is further improved.

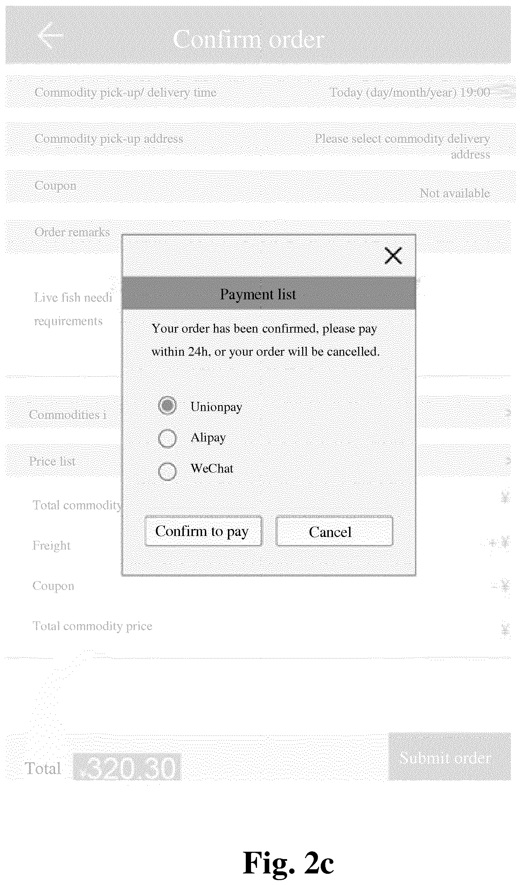

Fig. 2c is a schematic diagram for displaying the online payment outputted by the user device after the user confirms the order in one practical application. A third party system, for example, a banking system or a third party payment platform, may be invoked to perform online payment, and then the transaction confirmation information is sent to the server after the online payment is successful.

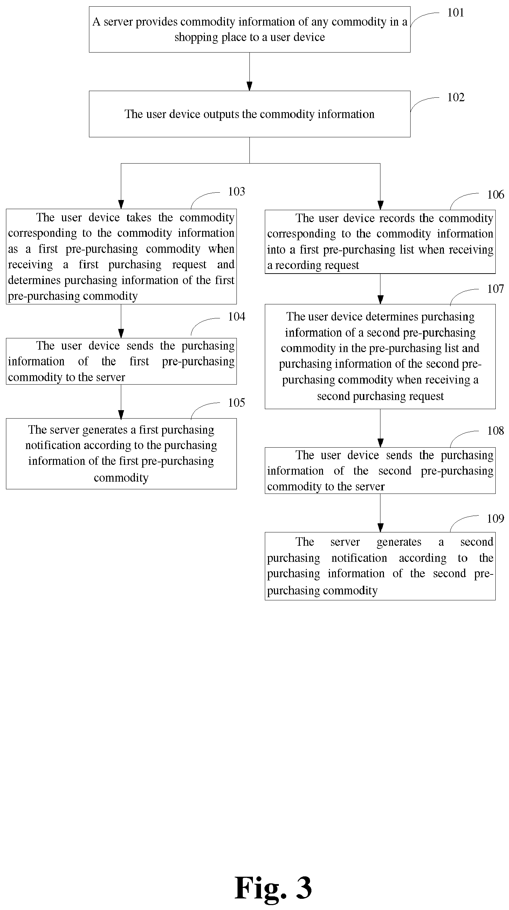

More commodities may be possibly by the user while shopping; therefore, as another embodiment as shown in Fig. 3, after the user device outputs the commodity information in step 102, the method may also include the following steps.

In step 106: the user device records the commodity corresponding to the commodity information into a pre-purchasing list when receiving a recording request.

Commodities expected to be purchased by the user may be recorded in the pre-purchasing list.

In step 107: the user device determines a second pre-purchasing commodity in the pre-purchasing list and purchasing information of the second pre-purchasing commodity when receiving a second purchasing request.

Wherein, more second pre-purchasing commodities may be included.

It should be noted that "the first pre-purchasing commodity" and the "second pre-purchasing commodity" are only intended to distinct purchasing manners of two different commodities from description. The "first" and the "second" do not possess any other signification.

The user device may output the pre-purchasing list according to a user output request, and the user may select the second pre-purchasing commodity expected to be purchased from the pre-purchasing list, so that the second purchasing request may be triggered.

The purchasing information may include a commodity name and a purchasing quantity, and may also include a unit commodity price and a total commodity price, or the like.

Wherein, the purchasing quantity of the purchasing information may be inputted by the user and carried in the second purchasing request.

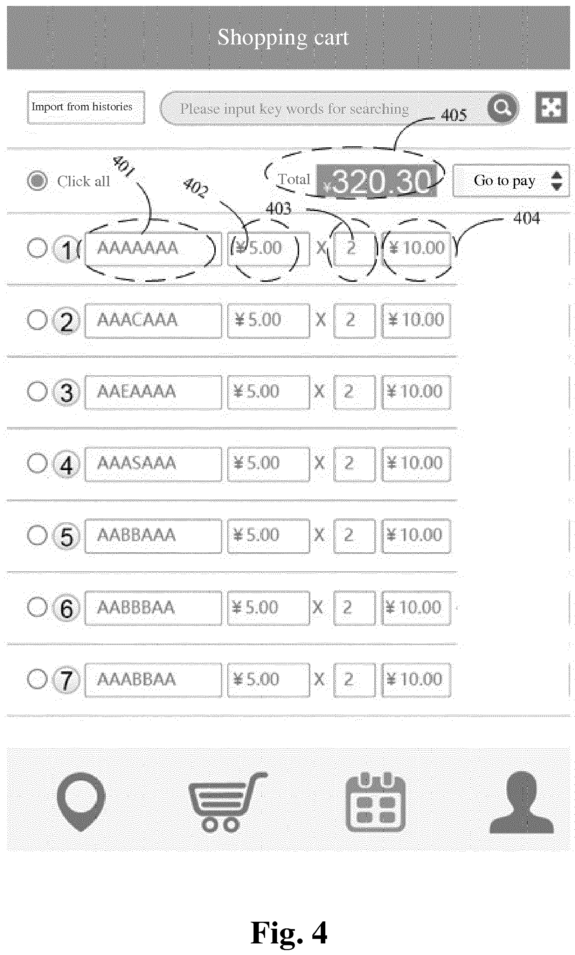

Fig. 4 is a schematic diagram for displaying the pre-purchasing list in one practical application. In Fig. 4, the pre-purchasing list includes and records a commodity name 401 of each commodity, a single commodity price 402, a purchasing quantity 403 and a total commodity price of a single commodity 404.

The second pre-purchasing commodity may be one or more commodities selected from the pre-purchasing list, so that the second purchasing request is triggered; therefore, the purchasing information of the second pre-purchasing commodity may also include the total commodity price of more commodities, like the total commodity price 405 in Fig. 4.

As another embodiment, after outputting the pre-purchasing list, the user may update the purchasing information of the commodity in the pre-purchasing list.

Therefore, after outputting the pre-purchasing list when receiving the user output request, the method may also include:

updating purchasing information of a commodity requested to be updated in the pre-purchasing list when receiving a user update request.

The updating may include modifying a purchasing quantity, or deleting the purchasing information of the commodity from the pre-purchasing list, etc.

In step 108: the user device sends the purchasing information of the second pre-purchasing commodity to the server.

In step 109: the server generates a second purchasing notification according to the purchasing information of the second pre-purchasing commodity, the second purchasing notification being used for promoting the distribution personnel to distribute commodity according to the purchasing information of the second pre-purchasing commodity.

The server generates the second purchasing notification namely after acquiring the purchasing information of the second pre-purchasing commodity. The second purchasing notification may be sent to a user device of the distribution personnel and outputted, to facilitate prompting the distribution personnel to distribute the second pre-purchasing commodity.

Through the embodiment of the present application, the commodity may be purchased by scanning an information code corresponding to the commodity, which not only can purchase one commodity directly, but also can add more commodities into the pre-purchasing list and purchase more commodities at a time; moreover, the user does not need to carry a large number of commodities to move, so that the shopping convenience and the shopping efficiency are improved.

Wherein, the server, after generating the second purchasing notification according to the purchasing information of the second pre-purchasing commodity, may also send commodity pick-up address information to the user device, then the user device outputs the address information, so that the user may uniformly pick up the second pre-purchasing commodity at a commodity pick-up place corresponding to the commodity pick-up address. Wherein, the commodity pick-up address may be a cashier desk of the shopping place, so that the user may directly acquire the second pre-purchasing commodity after paying at the cashier desk.

Certainly, the user device may send a receiving address to the server according to a user address request, wherein the receiving address may be carried in the purchasing information, so that the second purchasing notification is specifically used for notifying the distribution personnel to distribute commodities according to the purchasing information of the second pre-purchasing commodity and deliver the commodities according to the receiving address.

As another embodiment, the user device may also send a commodity pick-up time or a commodity receiving time to the server according to a user time request, thus picking up or receiving commodity by appointments.

The second pre-purchasing commodity may be paid after the user acquires the second pre-purchasing commodity.

As another embodiment, after the user sends the purchasing information of the second purchasing commodity, the method further includes the following step.

The server generates second transaction order information according to the purchasing information of the second pre-purchasing commodity, the second transaction order information at least including a commodity name and a total commodity price of the second pre-purchasing commodity; of course, the transaction order information may also include the commodity pick-up address information or the receiving address information, etc.

The user device receives the second transaction order information sent by the server and outputs the transaction order information.

The user device sends transaction confirmation information to the server when receiving a user confirmation request.

Then the server generates the second purchasing notification after receiving the transaction confirmation information.

By outputting the second transaction order information, the user is facilitate to confirm a pre-purchasing commodity and a commodity price, so as to decide whether to purchase; therefore, the user device sends the transaction confirmation information to the server when receiving the user confirmation request, and then the server generates the second purchasing notification.

Certainly, the user device sends transaction cancellation information to the server when receiving a user cancellation request, so that the server may cancel the transaction after receiving the transaction cancellation information and delete the second transaction order information.

Wherein, as another embodiment, in order to improve the shopping convenience and shopping efficiency to facilitate the payment of the user, the sending the transaction confirmation information to the server may include:

invoking a third party system to perform online payment according to the total commodity price of the second pre-purchasing commodity when receiving a user payment request; and

sending the transaction confirmation information to the server after the online payment is successful.

That is, the user may perform online payment through the user device, thus not needing to wait at a cashier desk for payment, so that the shopping convenience is further improved.

Wherein, in the foregoing embodiments, there may be various probable implementation manners for the server to provide the commodity information of any commodity in the shopping place to the user device.

In one probable implementation manner, the commodity information of any commodity in the shopping place provided by the server to the user device may be as follows:

the user device scans an information code corresponding to any commodity in the shopping place and sends code scanning information acquired through scanning to the server; and

the server searches commodity information of different commodities and code scanning information thereof, acquires commodity information matched with the code scanning information and sends the commodity information to the user device.

Wherein, the server is correspondingly pre-saved with commodity information of different commodities and code scanning information thereof.

The scanning the information code corresponding to the commodity in the commodity shelf by the user device may be to scan a commodity information code of the commodity, which is usually located in an overwrap of the commodity, so as to acquire code scanning information, wherein the commodity information code is namely included in the code scanning information.

Moreover, during practical application, to facilitate the user to search commodities and vie related information of the commodities, for instance, name, price, or the like, a label will be arranged for each commodity on a commodity shelf. The label may be used for recognizing different commodities, and may be used for displaying the related information of a corresponding commodity thereof, for instance, may display such related information of the commodity as a name and/or a commodity price of the commodity, a commodity origin, etc.

Each label may have a label information code, each commodity is corresponding to one label information code, and the label information code, which may be a one-dimensional code or a two-dimensional code, may be displayed in the label. In one practical application, the label may be a price label namely for displaying a commodity price of a corresponding commodity.

Therefore, as another embodiment, the scanning the information code corresponding to any commodity in the shopping place by the user device may be to scan the label information code of the commodity label, and the label information code is namely included in the code scanning information.

Wherein, the label may either be a paper label, or an electronic shelf label (Electronic Shelf Label System, ESL). The electronic shelf label is an electronic display device placed on the commodity shelf to replace a traditional paper label, can display such information as the price, information code, trademark and/or inventory of the commodity, or the like, and may modify the information displayed.

When the label is an electronic shelf label, the server may respectively scan each commodity and an electronic shelf label of each commodity by using a scanner, and may search the commodity information of the commodity according to the commodity information code, thus being capable of updating the information displayed in the electronic shelf label corresponding to the label information code according to the commodity information, and enabling the commodity to be bound to the electronic shelf label, so that the user device can both acquire the corresponding commodity information through scanning the commodity information code or the label information code.

The commodity information code and the label information code may be one-dimensional code or two-dimensional code, etc, and are unique identities.

In another probable implementation manner, the providing, by the server, the commodity information of any commodity in the shopping place to the user device may be as follows:

positioning, by the server, the user device and acquiring a device position of the user device; and

searching, by the server, a commodity position of any commodity in the shopping place and determining a commodity closest to the device position; and providing commodity information of the commodity closest to the device position to the user device.

Wherein, one or more commodities closest to the device position may be included; when more commodities are included, the user device may output the commodity information of each commodity respectively, or output the commodity information of each commodity in a form of list at the same time.

A commodity position of any commodity in the shopping place is pre-saved by the server.

Wherein, a wireless device may be pre-arranged in each commodity shelf of the shopping place; and the user device is used for receiving a wireless signal sent by the wireless device and/or sending a wireless signal to the wireless device.

Therefore, the positioning, by the server, the user device and acquiring the device position of the user device may be as follows:

positioning a device position of the user device according to the wireless signal of the wireless device received by the user device and a position of the wireless device.

The user device may upload the wireless signal of the wireless device received to the server, so that the server may position the user device.

Wherein, the positioning the device position of the user device according to the wireless signal of the wireless device received and the position of the wireless device may be calculated and acquired according to a signal intensity of the wireless signal of the wireless device received by the user device and the position of the wireless device.

A distance between the user device and the wireless device may be calculated according to the signal intensity of the wireless device received, so that the device position may be calculated and acquired according to the distance between the user device and the wireless device and the position of the wireless device. To be specific, a centroid algorithm may be adopted to calculate and acquire the device position by using the distance between the user device and the wireless device and the position of the wireless device.

The user device may receive wireless signals of more wireless devices, and wireless signals of N wireless devices may be selected and used for calculation according to a space dimension M of a position coordinate space and according to a descending sequence of signal intensities. Wherein, N is greater than or equal to M+1, and to be specific, may be equal to M+1. The device position of the user device may be calculated and acquired by using the distance between the user device and the N wireless devices and the positions of the N wireless devices.

Wherein, as a probable implementation manner, the distance between the user device and the wireless device may be calculated according to the wireless signal of the wireless device received by the user device by using a following formula:

$$d = 10^{\frac{|R| - A}{10 * n}} ;$$

R represents a signal intensity; d represents a distance between a hand-held terminal and the wireless device; A represents a signal intensity of a wireless signal sent by a sending device and received by a receiving device when the distance is 1m; and n represents a environmental attenuation factor.

As another probable implementation manner, the distance between the user device and the wireless device may be calculated according to the wireless signal of the wireless device received by the user device by using a following formula:

$$d^2 = C^2 (R_0 - R) ;$$

R represents a signal intensity, d represents the distance between the user device and the wireless device, C is a conversion scaling factor, $R_0$ may be an international standard value, or a mean signal intensity received when sending devices with known positions are infinitely close to receiving devices of different models.

Wherein, a primary preset value may be selected as C; of course, in order to acquire an accurate conversion scaling factor, the user device may select Q effective devices from the wireless devices corresponding to the wireless signals received, and Q is greater than or equal to M+1; to be specific, Q may be equal to M+1. A numerical value of the conversion scaling factor is adjusted by using the Q effective devices, and a corrected value of the conversion scaling factor is sought, the corrected value enabling Q circles or spheres formed by using a position of each effective device as a center and a corrected distance between each effective device and the target device as a radius to have a unique intersection. Then the distance between the user device and the wireless device is calculated by using the corrected value of the conversion scaling factor acquired.

Wherein, the position of the wireless device may either be preset in the foregoing possible implementation manner, or be acquired through calculation.

In a probable implementation manner, the wireless device may include a first class device and a second class device, wherein a position of the first class device is known; the first class device may upload the wireless signal received to the server; and the second class device may upload the wireless signal received to the server. In order to facilitate signal transmission, a first control device, which may specifically be an AP ( (Wireless Access Point, Wireless Access Point) may be disposed in an indoor ceiling of the shopping place, and the wireless signals received by the first class device and the second device are uploaded to the server through the first control device.

The position of the wireless device may be pre-determined according to a following manner:

the user uses the first class device and/or the second class device with determined position as the known device, and positions a position of any second class device with indeterminate position according to the position of the known device and a wireless signal sent by any second class device with indeterminate position and received by the known device.

Wherein, the second class device may be specifically disposed in the commodity shelf.

In another probable implementation manner, a second control device with known position is disposed in the indoor ceiling of the shopping place. the second control device may be disposed in the indoor ceiling according to a preset arrangement.

The second control device may upload the wireless signal received by the second control device and sent by the wireless device to the server; then the position of the wireless device may be pre-determined according to a following manner:

positioning, by the service system, a position of the wireless device according to the wireless signal received by the second control device and sent by the wireless device and a position of the second control device.

Wherein, as a probable implementation manner, a commodity position of any commodity in the shopping place saved in the server may be pre-determined according to a following manner:

positioning, by the server, a code scanning position of a scanner during each code scanning according to the wireless signal of the wireless device received when the scanner performs code scanning on each commodity in the commodity shelf and/or a label corresponding to the commodity as well as the position of the wireless device; and

taking the code scanning position of the scanner during each code scanning as a commodity position of the commodity subjected to the code scanning of the scanner.

Wherein, each commodity in the commodity shelf may be corresponding to one wireless device, and each commodity may be corresponding to one label; the positioning, by the server, the code scanning position of the scanner during each code scanning according to the wireless signal of the wireless device received when the scanner performs code scanning on each commodity in the commodity shelf and/or the label corresponding to the commodity as well as the position of the wireless device may be specifically as follows:

determining, by the server, a position of a wireless device closest to the scanner as a commodity position of a commodity subjected to code scanning according to the wireless signal of the wireless device received when the scanner performs code scanning on each commodity in the commodity shelf and/or the label corresponding to the commodity.

Wherein, the closest wireless device is namely the wireless device having strongest signal intensity.

Of course, the position may also be acquired by calculating and positioning according to the wireless signals and the position, while a manner for calculating and positioning according to the wireless signals and the position may be seen in the description above, and will not be elaborated herein.

When no label is arranged in the commodity shelf, the server positions the code scanning position of the scanner during each code scanning according to the wireless signal of the wireless device received when the scanner performs code scanning on each commodity in the commodity shelf and the position of the wireless device, wherein the position of the wireless device having strongest signal intensity may be selected as the commodity position of the commodity subjected to code scanning.

As another probable implementation manner, each commodity in the commodity shelf may be corresponding to one wireless device, and each commodity may be corresponding to one label;

the commodity position of any commodity in the shopping place saved in the server may be pre-determined according to a following manner:

receiving a commodity information code and a label information code sent by the scanner and acquired through performing code scanning on each commodity in the commodity shelf and a label corresponding to the commodity by the scanner; and

searching a corresponding relationship between different labels and different wireless devices according to the commodity information code and the label information code; and taking the position of the wireless device corresponding to the label of each commodity subjected to code scanning as the commodity position of the commodity.

The code scanning of the scanner on each commodity in the commodity shelf and the label corresponding to the commodity is to bind the commodity to the label thereof.

The label may be an integrated device that is integrated in a corresponding wireless device thereof, then a corresponding relationship between the label and the wireless device may be sent to the server by the wireless device.

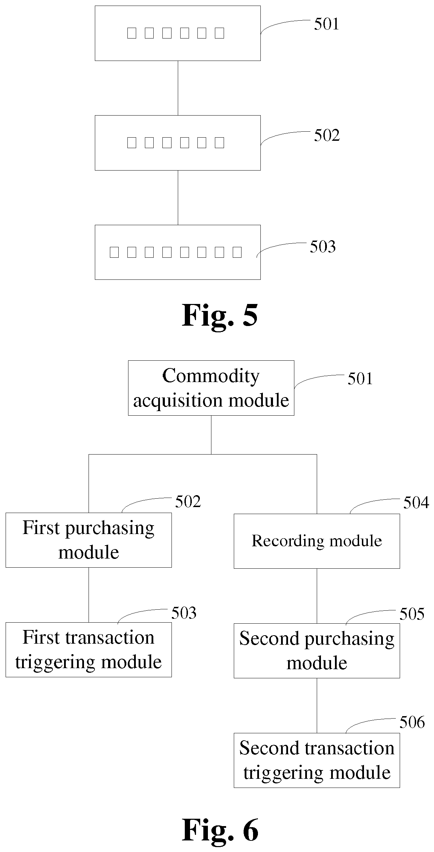

Fig. 5 is a structural schematic diagram of one embodiment of an apparatus for processing transaction data provided by the embodiments of the present application. The apparatus is specifically configured in a user device during practical application, and the user device may be mobile phone, a tablet and other mobile portable smart devices used by a user.

The apparatus may include:

a commodity acquisition module 501 configured to acquire commodity information of any commodity in a shopping place from a server and output the commodity information;

a first purchasing module 502 configured to take the commodity corresponding to the commodity information as the first pre-purchasing commodity when receiving a first purchasing request and determined the purchasing information of the first pre-purchasing commodity, wherein, the purchasing information may at least include a commodity name and a purchasing quantity, and may also include a commodity price and other information; and

a first transaction triggering module 503 configured to send the purchasing information of the first pre-purchasing commodity to the server to facilitate the server to generate a first purchasing notification, the first purchasing notification being used for promoting a distribution personnel to distribute commodity according to the purchasing information of the first pre-purchasing commodity.

According to the embodiment of the present application, the commodities may be uniformly distributed by a special distribution personnel, and the user does not need to carry a large number of commodities to move, so that the shopping convenience and the shopping efficiency are improved.

Moreover, as another embodiment, the apparatus may also include:

a first order acquisition module configured to receive first transaction order information sent by the server, wherein the first transaction order information is generated by the server according to the purchasing information of the first pre-purchasing commodity, and at least includes a commodity name and a total commodity price of the first pre-purchasing commodity; and of course, the transaction order information may also include the commodity pick-up address information or the receiving address information, etc; and

a first transaction confirming module configured to send transaction confirmation information to the server when receiving a user confirmation request to facilitate the server to generate the first purchasing notification after receiving the transaction confirmation information, the first purchasing notification being used for promoting the distribution personnel to distribute commodity according to the purchasing information of the first pre-purchasing commodity.

As another embodiment, in order to improve the shopping convenience and shopping efficiency to facilitate the payment of the user, the first transaction confirming module may include:

a first payment unit configured to invoke a third party system to perform online payment according to the total commodity price of the first pre-purchasing commodity when receiving a user confirmation request; and

a first confirmation unit configured to send transaction confirmation information to the server after the online payment is successful.

The user may possibly need to purchase more commodities during shopping at a time; therefore, as another embodiment, the difference of the embodiment as shown in Fig. 6 from that as shown in Fig. 5 lies in that the apparatus may include:

a recording module 504 configured to record the commodity corresponding to the commodity information into a pre-purchasing list when receiving a recording request;

a second purchasing module 505 configured to determine purchasing information of a second pre-purchasing commodity in the pre-purchasing list when receiving a second purchasing request; and

a second transaction triggering module 506 configured to send the purchasing information of the second pre-purchasing commodity to the server to facilitate the server to generate a second purchasing notification, the second purchasing notification being used for promoting the distribution personnel to distribute commodity according to the purchasing information of the second pre-purchasing commodity.

Moreover, the apparatus may also include:

a list output module configured to output the pre-purchasing list when receiving a user output request, the pre-purchasing list including purchasing information of each commodity recorded.

The purchasing information may either include a purchasing quantity, or include a purchasing price.
As another embodiment, the apparatus may also include:

a list updating module configured to update purchasing information of a commodity requested to be updated in the pre-purchasing list when receiving a user update request.

The updating may include modifying a purchasing quantity, or deleting the purchasing information of the commodity from the pre-purchasing list, etc.
Through the embodiment of the present application, the commodity may be purchased by scanning an information code corresponding to the commodity, which not only can purchase one commodity directly, but also can add more commodities into the pre-purchasing list and purchase more commodities at a time; moreover, the user does not need to carry a large number of commodities to move, so that the shopping convenience and the shopping efficiency are improved.
As another embodiment, the apparatus may also include:

a second order acquisition module configured to receive second transaction order information sent by the server, wherein the second transaction order information is generated by the server according to the purchasing information of the second pre-purchasing commodity, and at least includes a total commodity price of the second pre-purchasing commodity; of course, the second transaction order information may also include commodity pick-up address information or receiving address information, etc; and

a second transaction confirming module configured to send transaction confirmation information to the server when receiving a user confirmation request to facilitate the server to generate a second purchasing notification after receiving the transaction confirmation information, the second purchasing notification being used for prompting the distribution personnel to distribute commodity according to the purchasing information of the second pre-purchasing commodity.

As another embodiment, in order to improve the shopping convenience and shopping efficiency to facilitate the payment of the user, the second transaction confirming module may include:

a second payment unit configured to invoke a third party system to perform online payment according to the total commodity price of the second pre-purchasing commodity when receiving a user confirmation request; and

a second confirmation unit configured to send transaction confirmation information to the server after the online payment is successful.

That is, the user may perform online payment through the user device, thus not needing to wait at a cashier desk for payment, so that the shopping convenience is further improved.
In a probable implementation manner, the commodity acquisition module may include:

a code scanning unit configured to scan an information code corresponding to any commodity in the shopping place and send code scanning information acquired through scanning to the server; and

an acquisition unit configured to receive the commodity information provided by the server and matched with the code scanning information and output the commodity information, Wherein, the server is correspondingly pre-saved with commodity information of different commodities and code scanning information thereof.

In another probable implementation manner, the commodity acquisition module may be specifically configured to:

receive commodity information of a commodity closest to a device position of the user device provided by the server, the device position being acquired via positioning the user device by the server; and the server being pre-saved with a commodity position of any commodity in the shopping place.

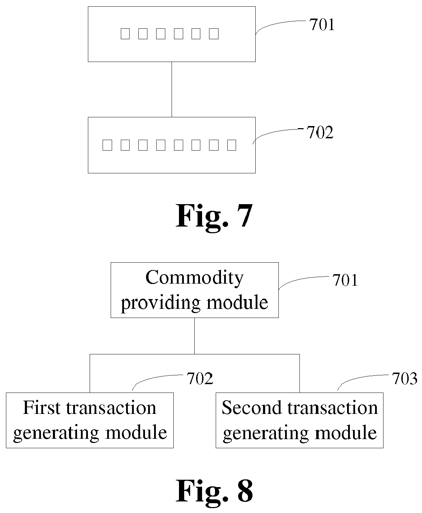

Fig. 7 is a structural schematic diagram of another embodiment of an apparatus for processing transaction data provided by the embodiments of the present application. The apparatus is specifically configured in a server, wherein the apparatus may include:

a commodity providing module 701 configured to provide commodity information of any commodity in a shopping place to a user device which is outputted by the user device; and

a first transaction generating module 702 configured to generate a first purchasing notification according to purchasing information of a first pre-purchasing commodity when receiving the purchasing information of the first pre-purchasing commodity sent by the user device, the purchasing information of the first pre-purchasing commodity being sent by the user device after taking the commodity corresponding to the commodity information as the first pre-purchasing commodity and determining the purchasing information of the first pre-purchasing commodity when receiving a first purchasing request, and the first purchasing notification being used for prompting a distribution personnel to distribute commodity according to the purchasing information of the first pre-purchasing commodity.

The apparatus may also be configured to receive code scanning information acquired by the scanner for scanning the commodity, and correspondingly save the commodity information of the commodity and the code scanning information.

Wherein, the server, after generating the first purchasing notification according to the purchasing information of the first pre-purchasing commodity, may also send commodity pick-up address information to the user device, then the user device outputs the address information, so that the user may uniformly pick up the first pre-purchasing commodity at a commodity pick-up place corresponding to the commodity pick-up address information. Wherein, the commodity pick-up address may be a cashier desk of the shopping place, so that the user may directly acquire the first pre-purchasing commodity after paying at the cashier desk.

Certainly, the user device may send a receiving address to the server according to a user address request, wherein the receiving address may be carried in the purchasing information, so that the first purchasing notification is specifically used for notifying the distribution personnel to distribute commodities according to the purchasing information of the first pre-purchasing commodity and deliver the commodities according to the receiving address.

As another embodiment, the user device may also send a commodity pick-up time or a commodity receiving time to the server according to a user time request, thus picking up or receiving commodity by appointments.

As another embodiment, the first transaction generating module may include:

a first order generating unit configured to generate first transaction order information according to the purchasing information of the first pre-purchasing commodity, wherein the first transaction order information at least includes a total commodity price of the pre-purchasing commodity; of course, the transaction order information may also include the commodity pick-up address information or the receiving address information, etc; and

a first transaction generating unit configured to generate the first purchasing notification after receiving the transaction confirmation information of the user device.

Wherein, the transaction confirmation information sent by the user device may be sent to the server after the user device invokes the third party system to perform online payment according to the total commodity price of the first pre-purchasing commodity when receiving the user confirmation request and after the online payment is successful.

As another embodiment as shown in Fig. 8, the apparatus, different from the embodiment as shown in Fig. 7, may also include:

a second transaction generating module 703 configured to generate a second purchasing notification when receiving purchasing information of a second pre-purchasing commodity sent by the user device, the purchasing information of the second pre-purchasing commodity being sent by the user device after determining the second pre-purchasing commodity in a pre-purchasing list when receiving a second purchasing request; and the second purchasing notification being used for prompting the distribution personnel to distribute commodity according to the purchasing information of the second pre-purchasing commodity.

As another embodiment, the second transaction generating module may include:

a second order generating unit configured to generate second transaction order information according to the purchasing information of the second pre-purchasing commodity, wherein the second transaction order information at least includes a total commodity price of the second pre-purchasing commodity; of course, the transaction order information may also include the commodity pick-up address information or the receiving address information, etc; and

a second transaction generating unit configured to generate the second purchasing notification after receiving the transaction confirmation information of the user device.

Wherein, in a probable implementation manner, the commodity providing module may include:

a receiving unit configured to receive code scanning information sent by the user device, the code scanning information being acquired by the user device through scanning an information code corresponding to any commodity in the shopping place; and

a sending unit configured to search commodity information of different commodities and code scanning information thereof, acquire commodity information matched with the code scanning information and send the commodity information to the user device.

In another probable implementation manner, the commodity providing module may include:

a positioning unit configured to position the user device and acquire a device position of the user device; and

a providing unit configured to search a commodity position of any commodity in the shopping place and determine a commodity closest to the device position; and provide commodity information of the commodity closest to the device position to the user device.

Wherein, a wireless device is pre-arranged in each commodity shelf in the shopping place; and the user device is used for receiving a wireless signal sent by the wireless device and/or sending a wireless signal to the wireless device.
The positioning unit may be specifically configured to:

position a device position of the user device according to the wireless signal of the wireless device received by the user device and a position of the wireless device.

Wherein, the position of the wireless device may be acquired through calculation.
Therefore, a probable implementation manner, the wireless device may include a first class device and a second class device, wherein a position of the first class device is known; the first class device may upload the wireless signal received to the server; and the second class device may upload the wireless signal received to the server. In order to facilitate signal transmission, a first control device, which may specifically be an AP, may be disposed in an indoor ceiling of the shopping place, and the wireless signals received by the first class device and the second device are uploaded to the server through the first control device.
The apparatus may also include:

a first positioning module configured to take the first class device and/or the second class device with determined position as the known device, and position a position of any second class device with indeterminate position according to the position of the known device and a wireless signal sent by any second class device with indeterminate position and received by the known device.

In another probable implementation manner, a second control device with known position is disposed in the indoor ceiling of the shopping place. The second control device may be disposed in the indoor ceiling according to a preset arrangement.
The second control device may upload the wireless signal received by the second control device and sent by the wireless device to the server.
The apparatus may also include:

positioning a position of the wireless device according to the wireless signal received by the second control device and sent by the wireless device and a position of the second control device.

Wherein, a commodity position of any commodity in the shopping place may be determined through various implementation manners.
In a probable implementation manner, the apparatus may also include:

a first commodity positioning module configured to position a code scanning position of a scanner during each code scanning according to the wireless signal of the wireless device received when the scanner performs code scanning on each commodity in the commodity shelf and/or a label corresponding to the commodity as well as the position of the wireless device; and take the code scanning position of the scanner during each code scanning as a commodity position of the commodity subjected to the code scanning of the scanner.

Wherein, each commodity in the commodity shelf may be corresponding to one wireless device, and each commodity may be corresponding to one label;
The first commodity positioning module may be specifically configured to determine a position of a wireless device closest to the scanner as the commodity position of the commodity subjected to code scanning according to the wireless signal of the wireless device received when the scanner performs code scanning on each commodity in the commodity shelf and/or the label corresponding to the commodity.

Wherein, the closest wireless device is namely the wireless device having strongest signal intensity.

Of course, the position may also be acquired by calculating and positioning according to the wireless signals and the position, while a manner for calculating and positioning according to the wireless signals and the position may be seen in the description above, and will not be elaborated herein.

In another probable manner, each commodity in the commodity shelf may be corresponding to one wireless device and each commodity may be corresponding to one label.

The apparatus may also include:

a second commodity positioning module configured to receive a commodity information code and a label information code sent by the scanner and acquired through performing code scanning on each commodity in the commodity shelf and a label corresponding to the commodity by the scanner; and search a corresponding relationship between different labels and different wireless devices according to the commodity information code and the label information code; and take the position of the wireless device corresponding to the label of each commodity subjected to code scanning as the commodity position of the commodity.

The embodiments of the present application also provide a system for processing transaction data, including a user device and a server. The user device may be configured with the apparatus for processing transaction data as shown in Fig. 5 or Fig. 6, while the server may be configured with the apparatus for processing transaction data as shown in Fig. 7 or Fig. 8.

Therefore, the embodiments of the present application also provide a user device, and the user device may include a memory and a processor;
the memory is stored with a set or more sets of program instructions; and
the processor is configured to invoke and perform the one set or more set of program instructions in the memory to implement the following operations:

acquiring commodity information of any commodity in a shopping place from a server and outputting the commodity information;
taking the commodity corresponding to the commodity information as a first pre-purchasing commodity when receiving a first purchasing request and determining purchasing information of the first pre-purchasing commodity, the purchasing information at least including a commodity name and a purchasing quantity; and
sending the purchasing information of the first pre-purchasing commodity to the server to facilitate the server to generate a first purchasing notification, the first purchasing notification being used for promoting a distribution personnel to distribute commodity according to the purchasing information of the first pre-purchasing commodity.

The embodiments of the present application also provide a server, and the server may include a memory and a processor;
the memory is stored with a set or more sets of program instructions; and
the processor is configured to invoke and perform the one set or more set of program instructions in the memory to implement the following operations:

providing commodity information of any commodity in a shopping place to a user device which is outputted by the user device; and

generating a first purchasing notification according to purchasing information of a first pre-purchasing commodity when receiving the purchasing information of the first pre-purchasing commodity sent by the user device, the purchasing information of the first pre-purchasing commodity being sent by the user device after taking the commodity corresponding to the commodity information as the first pre-purchasing commodity and determining the purchasing information of the first pre-purchasing commodity when receiving a first purchasing request, and the first purchasing notification being used for prompting a distribution personnel to distribute commodity according to the purchasing information of the first pre-purchasing commodity.

Through the embodiments of the present application, when the user is purchasing in the shopping place, the server may provide commodity information to the user device, and the user may take the commodities expected to purchase as pre-purchasing commodities through the user device, and submit the purchasing information to the server, so that the server may distribute commodities according to the purchasing information, which does not need to carry a large number of commodities; therefore, the shopping convenience and shopping efficiency are improved, and the user may perform online payment on the pre-purchasing information through the user device, so that the time for waiting at the cashier desk is saved, and the shopping convenience and shopping efficiency are further improved.

The functions described in the methods of the embodiments of the present application may be stored in a computing device readable storage medium if being implemented in a form of software functional units and sold or used as an independent product. Based on such understanding, the part of the embodiments of the present application contributing to the prior art, or the part of the technical solution may be implemented in the form of a software product. The computer software product is stored in a storage medium, and includes several instructions for instructing a computing device (which may be a personal computer, a server, a mobile computing device or a network device so on) to execute all or a part of steps of the method according to each embodiment of the present application. While the forementioned storage medium includes: any medium that is capable of storing program codes, such as a USB disk, a mobile hard disk drive, a read-only memory (ROM, Read-Only Memory), a random access memory (RAM, Random Access Memory), a magnetic disk, or an optical disk.

The explanation above shows and describes more preferred embodiments of the present application, but as previously mentioned, it should be understood that the present application is not limited to the forms disclosed herein, and shall not be deemed as an exclusion to other embodiments, but can be applied to various other combinations, amendments and circumstances, and can be modified through the foregoing teaching or technologies or knowledge of related arts within the scope of the application concept herein. While modifications and changes made by those skilled in the art without departing from the spirit and scope of the present application shall all fall within the protection scope of the claims of the present application appended.

**Claims**

1. A method for processing transaction data, comprising:

   acquiring, by a user device, commodity information of any commodity in a shopping place from a server and outputting the commodity information;
   taking the commodity corresponding to the commodity information as a first pre-purchasing commodity when receiving a first purchasing request and determining purchasing information of the first pre-purchasing commodity, wherein the purchasing information at least comprises a commodity name and a purchasing quantity; and
   sending the purchasing information of the first pre-purchasing commodity to the server to facilitate the server to generate a first purchasing notification, the first purchasing notification being used for promoting a distribution personnel to distribute commodity according to the purchasing information of the first pre-purchasing commodity.

2. The method according to claim 1, wherein the acquiring, by the user device, commodity information of any commodity in the shopping place from the server and outputting the commodity information comprises:

   scanning, by the user device, an information code corresponding to any commodity in the shopping place and sending code scanning information acquired through scanning to the server; and
   receiving the commodity information provided by the server and matched with the code scanning information and outputting the commodity information; wherein commodity information of different commodities and code scanning information thereof are pre-saved correspondingly by the server.

3. The method according to claim 1, wherein the acquiring, by the user device, the commodity information of any commodity in the shopping place from the server comprises:

   receiving, by the user device, commodity information of a commodity closest to a device position of the user device provided by the server; wherein the device position is acquired via positioning the user device by the server; and a commodity position of any commodity in the shopping place is pre-saved by the server.

4. The method according to claim 1, wherein after the acquiring, by the user device, the commodity information of any commodity in the shopping place from the server and outputting the commodity information, the method further comprises:

   recording the commodity corresponding to the commodity information into a pre-purchasing list when receiving a recording request;
   determining purchasing information of a second pre-purchasing commodity in the pre-purchasing list when receiving a second purchasing request; and
   sending the purchasing information of the second pre-purchasing commodity to the server to facilitate the server to generate a second purchasing notification, the second purchasing notification being used for promoting the distribution personnel to distribute commodity according to the purchasing information of the second pre-purchasing commodity.

5. The method according to claim 1, wherein after the sending the purchasing information of the first pre-purchasing commodity to the server, the method further comprises:

   receiving first transaction order information sent by the server, the first transaction order information being generated by the server according to the purchasing information of the first pre-purchasing commodity, and at least comprising a commodity name and a total commodity price of the first pre-purchasing commodity; and

sending transaction confirmation information to the server when receiving a user confirmation request to facilitate the server to generate the first purchasing notification after receiving the transaction confirmation information, the first purchasing notification being used for promoting the distribution personnel to distribute commodity according to the purchasing information of the first pre-purchasing commodity.

6. A method for processing transaction data, comprising:

providing, by a server, commodity information of any commodity in a shopping place to a user device which is outputted by the user device; and

generating a first purchasing notification according to purchasing information of a first pre-purchasing commodity when receiving the purchasing information of the first pre-purchasing commodity sent by the user device, the purchasing information of the first pre-purchasing commodity being sent by the user device after taking the commodity corresponding to the commodity information as the first pre-purchasing commodity and determining the purchasing information of the first pre-purchasing commodity when receiving a first purchasing request, and the first purchasing notification being used for prompting a distribution personnel to distribute commodity according to the purchasing information of the first pre-purchasing commodity.

7. The method according to claim 6, wherein the providing, by the server, the commodity information of any commodity in the shopping place to the user device comprises:

receiving code scanning information sent by the user device, the code scanning information being acquired by the user device through scanning an information code corresponding to any commodity in the shopping place; and

searching commodity information of different commodities and code scanning information thereof, acquiring commodity information matched with the code scanning information and sending the commodity information to the user device.

8. The method according to claim 6, wherein the providing, by the server, the commodity information of any commodity in the shopping place to the user device comprises:

positioning the user device and acquiring a device position of the user device; and

searching a commodity position of any commodity in the shopping place and determining a commodity closest to the device position; and providing commodity information of the commodity closest to the device position to the user device.

9. The method according to claim 6, wherein after the providing commodity information of any commodity in the shopping place to the user device and outputting, by the user device, the commodity information, the method further comprises:

generating a second purchasing notification when receiving purchasing information of a second pre-purchasing commodity sent by the user device, the purchasing information of the second pre-purchasing commodity being sent by the user device after determining the second pre-purchasing commodity in a pre-purchasing list when receiving a second purchasing request; and the second purchasing notification being used for prompting the distribution personnel to distribute commodity according to the purchasing information of the second pre-purchasing commodity.

10. An apparatus for processing transaction data, comprising:

a commodity acquisition module configured to acquire commodity information of any commodity in a shopping place from a server and output the commodity information;

a first purchasing module configured to take the commodity corresponding to the commodity information as a first pre-purchasing commodity when receiving a first purchasing request and determine purchasing information of the first pre-purchasing commodity, the purchasing information at least comprising a commodity name and a purchasing quantity; and

a first transaction triggering module configured to send the purchasing information of the first pre-purchasing commodity to the server to facilitate the server to generate a first purchasing notification, the first purchasing notification being used for promoting a distribution personnel to distribute commodity according to the purchasing information of the first pre-purchasing commodity.

11. The apparatus according to claim 10, wherein the commodity acquisition module comprises:

a code scanning unit configured to scan an information code corresponding to any commodity in the shopping place and send code scanning information acquired through scanning to the server; and

an acquisition unit configured to receive the commodity information provided by the server and matched with the code scanning information and output the commodity information; wherein commodity information of different commodities and code scanning information thereof are pre-saved correspondingly by the server.

12. The apparatus according to claim 10, wherein the commodity acquisition module is specifically configured to: receive commodity information of a commodity closest to a device position of the user device provided by the server; wherein the device position is acquired via positioning the user device by the server; and a commodity position of any commodity in the shopping place is pre-saved by the server.

13. An apparatus for processing transaction data, comprising:

a commodity providing module configured to provide commodity information of any commodity in a shopping place to a user device which is outputted by the user device; and

a first transaction generating module configured to generate a first purchasing notification according to purchasing information of a first pre-purchasing commodity when receiving the purchasing information of the first pre-purchasing commodity sent by the user device, the purchasing information of the first pre-purchasing commodity being sent by the user device after taking the commodity corresponding to the commodity information as the first pre-purchasing commodity and determining the purchasing information of the first pre-purchasing commodity when receiving a first purchasing request, and the first purchasing notification being used for prompting a distribution personnel to distribute commodity according to the purchasing information of the first pre-purchasing commodity.

14. The apparatus according to claim 13, wherein the commodity providing module comprises:

a receiving unit configured to receive code scanning information sent by the user device, the code scanning information being acquired by the user device through scanning an information code corresponding to any commodity in the shopping place; and

a sending unit configured to search commodity information of different commodities and code scanning information thereof, acquire commodity information matched with the code scanning information and send the commodity information to the user device.

15. The apparatus according to claim 13, wherein the commodity providing module comprises:

a positioning unit configured to position the user device and acquire a device position of the user device; and

a providing unit configured to search a commodity position of any commodity in the shopping place and determine a commodity closest to the device position; and provide commodity information of the commodity closest to the device position to the user device.

| A server provides commodity information of any commodity in a shopping place to a user device | 101 |

↓

| The user device outputs the commodity information | 102 |

↓

| The user device takes the commodity corresponding to the commodity information as a first pre-purchasing commodity when receiving a first purchasing request and determines purchasing information of the first pre-purchasing commodity | 103 |

↓

| The user device sends the purchasing information of the first pre-purchasing commodity to the server | 104 |

↓

| The server generates a first Purchasing notification according to the purchasing information of the first pre-purchasing commodity | 105 |

## Fig. 1

EP 3 287 978 A1

Product information — 203    202

Add into shopping cart    Buy directly    Cancel

201

Original Vodka wine (sky) imported from USA
vodka cocktail

Price ¥75.00

204

Promotion price ¥65.50    Preference premium for autumn

| Origin: | USA |
| Brand: | SKYY |
| Alcoholic content: | 40%vol |
| Net content: | 750ml |
| Materials: | water, naked barley and edible alcohol |
| Expiration date: | long-term |
| Storage conditions: | constant temperature and humidity, and protected from illumination and vibration |
| Manufacturer: | SKYY SPIRTS LLC |
| Bar code: | 7210599007504 |

205

**Fig. 2a**

19

| | |
|---|---|
| ← Confirm order | |

| | |
|---|---|
| Commodity pick-up/ delivery time | Today (day/month/year) 19:00 |
| Commodity pick-up address | Please select commodity delivery address |
| Coupon | Not available |
| Order remarks | |

Live fish needing to be butchered; cut meat into pieces; please tell us your special requirements above fresh good

| | |
|---|---|
| Commodities in total? | > |
| Price list | > |
| Total commodity price | ¥ |
| Freight | + ¥ |
| Coupon | - ¥ |
| Total commodity price | ¥ |

Total ¥320.30    Submit order

# Fig. 2b

Commodity pick-up/ delivery time                    Today (day/month/year) 19:00

Commodity pick-up address                    Please select commodity delivery
                                                           address

Coupon                                              Not available

Order remarks

Live fish needi |  ┌──────────────────────────────────┐  ✕
requirements    |  │        Payment list              │
                |  │  Your order has been confirmed, please pay
                |  │  within 24h, or your order will be cancelled.
                |  │
                |  │  ◉  Unionpay
Commodities i   |  │  ○  Alipay
                |  │  ○  WeChat
Price list      |  │
                |  │  ┌──────────────┐  ┌──────────┐
Total commodity │  │  │ Confirm to pay│  │  Cancel  │
                |  │  └──────────────┘  └──────────┘
Freight         |  └──────────────────────────────────┘

Coupon

Total commodity price

Total ¥20.30                                        Submit order

# Fig. 2c

A server provides commodity information of any commodity in a shopping place to a user device ⌐ 101

The user device outputs the commodity information ⌐ 102

⌐ 103
The user device takes the commodity corresponding to the commodity information as a first pre-purchasing commodity when receiving a first purchasing request and determines purchasing information of the first pre-purchasing commodity

⌐ 104
The user device sends the purchasing information of the first pre-purchasing commodity to the server

⌐ 105
The server generates a first purchasing notification according to the purchasing information of the first pre-purchasing commodity

⌐ 106
The user device records the commodity corresponding to the commodity information into a first pre-purchasing list when receiving a recording request

⌐ 107
The user device determines purchasing information of a second pre-purchasing commodity in the pre-purchasing list and purchasing information of the second pre-purchasing commodity when receiving a second purchasing request

⌐ 108
The user device sends the purchasing information of the second pre-purchasing commodity to the server

⌐ 109
The server generates a second purchasing notification according to the purchasing information of the second pre-purchasing commodity

# Fig. 3

## Shopping cart

Import from histories | Please input key words for searching  405 🔍 ⊡

⦿ Click all  *401*  *402*  Total  ¥320.30  403  Go to pay ⬍  404

○ ① | AAAAAAA | ¥5.00 | X | 2 | ¥10.00

○ ② | AAACAAA | ¥5.00 | X | 2 | ¥10.00

○ ③ | AAEAAAA | ¥5.00 | X | 2 | ¥10.00

○ ④ | AAASAAA | ¥5.00 | X | 2 | ¥10.00

○ ⑤ | AABBAAA | ¥5.00 | X | 2 | ¥10.00

○ ⑥ | AABBBAA | ¥5.00 | X | 2 | ¥10.00

○ ⑦ | AAABBAA | ¥5.00 | X | 2 | ¥10.00

# Fig. 4

□ □ □ □ □ □     501

□ □ □ □ □ □     502

□ □ □ □ □ □ □ □     503

**Fig. 5**

Commodity acquisition module     501

First purchasing module     502

Recording module     504

First transaction triggering module     503

Second purchasing module     505

Second transaction triggering module     506

**Fig. 6**

701

702

**Fig. 7**

Commodity providing module — 701

First transaction generating module — 702

Second transaction generating module — 703

**Fig. 8**

Europäisches
Patentamt

European
Patent Office

Office européen
des brevets

# EUROPEAN SEARCH REPORT

Application Number

EP 16 20 0854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/110781 A1 (BEDEL TERESA ELIZABETH [US] ET AL) 21 April 2016 (2016-04-21) * paragraph [0015] - paragraph [0019]; figure 1 * | 1-15 | INV. G06Q30/06 |

TECHNICAL FIELDS
SEARCHED    (IPC)

G06Q

The present search report has been drawn up for all claims

| Place of search | Date of completion of the search | Examiner |
|---|---|---|
| Munich | 11 January 2017 | Weidmann, Matthias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 20 0854

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2017

| Patent document cited in search report | Publication date | Patent family member(s) | Publication date |
|---|---|---|---|
| US 2016110781 A1 | 21-04-2016 | NONE | |

EPO FORM P0459

For more details about this annex : see Official Journal of the European Patent Office, No. 12/82